# EUROPEAN PATENT SPECIFICATION

(11) **EP 1 109 732 B1**
(45) Date of publication and mention of the grant of the patent: **03.03.2004**
(21) Application number: 99935397.2
(22) Date of filing: 02.07.1999
(51) Int. Cl.: B65G 59/00, B65H 3/44, G07F 11/54

(54) **SNACK DISPENSER**
SNACKSPENDER
DISTRIBUTEUR DE COLLATION

(30) Priority: 07.07.1998 US 111333
(43) Date of publication of application: 27.06.2001
(73) Proprietor: Newco Enterprises, Inc., St. Charles, Missouri 63301 (US)
(72) Inventor: Castleberry, Billy, J., Lubbock, TX 79413 (US)
(74) Representative: Zeitler & Kollegen
(86) International application number: PCT/US1999/014989
(87) International publication number: WO 2000/001603

(56) References cited:
- US-A- 931 961
- US-A- 1 697 510
- US-A- 1 796 133
- US-A- 2 253 554
- US-A- 2 512 183
- US-A- 4 757 956
- US-A- 5 067 630

## Description

### BACKGROUND OF THE INVENTION:

### (1) Field of the Invention

This invention relates to snack dispensers generally. Vending dispensers or vending machine owners and lessors have ordinary skill in this art.

### (2) Description of the Related Art

The art related to this invention falls into two major categories: 1) honor system dispensers; and 2) full security vending systems.

Honor system snack dispensers are those dispensers where the product is displayed in an uncovered and unattended manner. When a customer desires to purchase one of the snacks contained therein, he places money in a box and removes the desired item. The term "honor system" stems from the fact that not only is there not a check to be sure the proper amount of money was entered in the box, but also there is no way to tell that any money was entered in the box at all. The "honor system" dispensers are generally used in offices and other areas not generally open to the public.

Document US5067630 discloses a vending machine where the items on sale are displayed in cylinder-shaped carousels. Refilling of the cabinets is carried out by removing and replacing these portable segments with refilled carousels.

A vending machine is disclosed in document US1697510, accommodating a removable money pan and an upper magazine casing part which can be lifted as a whole for replenishing the magazine with packages to be vended.

A revolving stand, suitable for accommodating articles is disclosed in US931961. The stand consists of cylindrical double compartment sections, each of which includes a lower cylindrical section having transparent walls and vertical support strips. A rotable shelf is allocated between each pair of sections.

Document US4757956 discloses a collapsable spool holder where a pair of vertically spaced apart horizontally extending walls are telescopically inner-connected and mounted to a base and are arranged to move outwardly from the base to an erect position or to collapse into the base.

Vending companies that maintain these honor system boxes make their use economical by.having very short turnaround times for replenishment. The replenishment usually takes place by having a vending company employee carry in an entire new product box, with empty change box, and replace the existing box. Restocking of the depleted box and removal of the change contained therein usually takes place at a central processing facility.

These honor system boxes have the advantages that they are: 1) inexpensive to build; and 2) easy to replenish. They have the disadvantages that not everyone utilizing such facilities are honest.

The second type related art are full security vending machines placed for use by the general public. These machines are fully secured in that there is no possibility, save extensive physical damage, that the product or the change revenues can be pillaged.

These large machines have the advantage that they are secure. They have the disadvantage that they are expensive, very time consuming to replenish, and not economically feasible for small vending accounts.

### SUMMARY OF THE INVENTION:

### (1) Progressive Contribution to the Art

This snack dispensing device was created to retain the advantages of the honor snack dispensing systems, but also to add the security features present in the larger, general public machines. In other words, this snack dispensing system occupies the middle ground between the honor system snack dispensers and the full security general public dispensers. This system is designed for the smaller, not generally open to the public, snack dispensing situations; however, the system is designed to gain security of the product and proceeds in a relatively inexpensive device.

### (2) Objects of this Invention

An object of this invention is to create a snack dispensing device that has the advantages of being relatively inexpensive, easy to reload, and having 96 product selections of various sizes available and visible.

Further, an object of this device is to accomplish the above mentioned objectives while gaining security over the honor system dispensing methods similar to the full security snack dispensing systems with less cost.

Another object is for the vending unit to be reliable, having as few moving parts as possible, yet not requiring an external power source.

Another object is to have the vending unit capable of quick field service, that is, replenishing the vending unit and removing the change accumulated therein, preferably in no more than two minutes.

Another object is to have as few steps as possible for the actual purchase of articles from the unit.

Another object is to identify and accumulate information about total sales and which sales were from individual level. From this information both profitability and inventory can be tracked.

Another object is to have the vending unit fit on limited size counter tops and under low height cabinets above the counter tops.

Another object is to have the hardware and system whereby during transportation of the hardware from the vending locations to a central replenishing location and back the hardware is small in volume and protected from damage.

Another object is to have high product visibility.

Yet another object is to have multiple levels of vending with each level capable of having a separate price independent of the other levels and in no particular price order.

Further objects are to achieve the above with devices that are sturdy, compact, durable, lightweight, simple, safe, efficient, versatile, ecologically compatible, energy conserving, and reliable, yet inexpensive and easy to manufacture, install, operate, and maintain.

Other objects are to achieve the above with a method that is rapid, versatile, ecologically compatible, energy conserving, efficient, and inexpensive, and does not require highly skilled people to install, operate, and maintain.

The specific nature of the invention, as well as other objects, uses, and advantages thereof, will clearly appear from the following description and from the accompanying drawings, the different views of which are not necessarily scale drawings.

### BRIEF DESCRIPTION OF THE DRAWINGS:

- Fig. 1: Perspective front view.
- Fig. 2: Perspective view of the base.
- Fig. 3: Perspective view of the carousel.
- Fig. 4: Cross-section of snack vendor.
- Fig. 5: Perspective of base and cutaway detent track.
- Fig. 6: Exploded schematic of base,carousel and tray assemblies.
- Fig. 7: Perspective view of back cover.
- Fig. 8: Perspective view of tray assemblies
- Fig. 9: Top plan view of a tray.
- Fig. 10: Perspective cutaway of tray.
- Fig. 11: Perspective of a collapsed segment assembly.
- Fig. 12: Perspective of a telescoped segment assembly.
- Fig. 13: Perspective of front shell.
- Fig. 14: Perspective of a door.
- Fig. 15: Front elevation view of a door.
- Fig. 16: Top plan view of a door.
- Fig. 17: Top plan of a segment assembly.
- Fig. 18: Top plan of a pin system.
- Fig. 19: Side view of a pin system.
- Fig. 20: Schematic of the pin system without a removable divider.
- Fig. 21: Schematic of the pin system with a removable divider present.
- Fig. 22: Top plan view of the door lock mechanism with no arms in place.
- Fig.: 23 Top plan view of the door lock mechanism with the cam interlock arm in place.
- Fig.: 24 Top plan view of the door lock mechanism with the cam interlock arm and the lower cam price lock arm in place.
- Fig.: 25a Top plan view of the door lock mechanism with all the parts in place.
- Fig: 25b Exploded side elevational view of the door lock mechanism taken substantially along line 25b-25b of Fig. 25a.
- Fig.: 25c Exploded side elevational view of the front and back cover and board.
- Fig.: 26 Top plan view of the lower cam
- Fig.: 27 Side plan view of the lower cam substantially along line 27-27 of figure 26.
- Fig.: 28 Bottom plan view of the lower cam.
- Fig.: 29 Side plan view of the lower cam substantially along line 29-29 of figure 26.
- Fig.: 30 Top plan view of the upper cam.
- Fig.: 31 Side view of the upper cam substantially along line 31-31 of figure 30.
- Fig.: 32 Bottom plan view of the lower cam.
- Fig.: 33 Side plan view of the cam interlock arm substantially along 33-33 of figure 34.
- Fig.: 34 Top plan view of the cam interlock arm.
- Fig.: 35 Side plan view of the lower cam price block arm.
- Fig.: 36 Top plan view of the lower cam price block arm.
- Fig.: 37 Top plan view of the carousel lock arm.
- Fig.: 38 Side plan view of the carousel lock arm substantially along line 38-38 of Fig. 37
- Fig.: 39 Side schematic view of the carousel lock arm, rocker and lock member.
- Fig.: 40 Perspective view of the collapsed tray assembly in a box.

### CATALOGUE OF ELEMENTS:

As an aid to correlating the terms of the claims to the exemplary drawing(s), the following catalog and index of elements and steps is provided:
- 10: Tray
- 12: Base
- 13: Base plate
- 16: Carousel
- 18: Coin box
- 20: Back shell
- 22: Front shell
- 24: Level 4 door
- 26: Level 3 door
- 27: Front cover
- 28: Level 2 door
- 29: Board
- 30: Level 1 door
- 32: Door lock mechanism
- 33: Cover
- 33b: Cover support, back
- 33f: Cover support, front
- 34: Removable divider
- 35: Divider guides
- 36: Permanent Divider
- 40: First Level or tier
- 42: Second Level or tier
- 44: Third Level or tier
- 46: Fourth Level or tier
- 48: Shaft hole
- 50: Shaft
- 54: Mounting piece
- 56: Roller shaft
- 58: Bolt
- 60: Roller base
- 62: Roller
- 64: Lower ledge of roller
- 65: Flange
- 66: Detent
- 68: Detent support
- 70: Detent wheel
- 72: Detent guide
- 74: Detent spring
- 76: Detent applicator guide
- 78: Detent spring applicator
- 80: Groove for back shell
- 82: Upper center piece
- 84: Lower center piece
- 86: Detent wheel pin
- 88: Tray support
- 92: Inside circular band
- 96: Race
- 98: Detent track
- 102: Locking ring
- 104: Back shell connector lugs
- 106: Coin box cavity
- 108: Tray assembly
- 109: Box
- 110: Segment assembly
- 116: T-lug
- 118: T-groove or T-slot
- 130: Door hole for level 1
- 132: Door hole for level 2
- 134: Door hole for level 3
- 136: Door hole for level 4
- 138: Door cutaway
- 140: Pin slot
- 142: Handle
- 144: Upper edge
- 146: Guide or door retainer, upper
- 148: Guide or door retainer, lower
- 150: Door vane
- 154: Lower edge
- 156: Double slot
- 158: Single slot
- 160: Pin #1
- 162: Pin #2
- 164: Lever
- 168: Pin base
- 170: Block, Pin #1 System
- 171: Slot for pin #2 System
- 172: Lower Cam
- 174: Upper Cam
- 176: Lower Cam Price Block Arm
- 177: Push location, bar
- 178: Cam Interlock Arm
- 179: Push location, shaft
- 180: Carousel Stop Arm
- 182: Guide Rails
- 194: Lower Cam Door 1 contact point
- 196: Lower Cam Door 2 contact point
- 198: Upper Cam Door 3 contact point
- 200: Upper Cam Door 4 contact point
- 201: Front shell clip
- 202: Shaft on lower cam
- 203: Back shell clip
- 204: Shaft, upper cam
- 205: Cover clip
- 206: Slot, Cam interlock arm
- 208: Shaft slot, lower cam price block arm
- 210: Door 1 Block
- 212: Door 2 Block
- 214: Door 3 Block
- 216: Door 4 Block
- 218: Interlock Arm Groove
- 220: Ridge on lower cam
- 222: Ridge Slot
- 224: Price Lock portion, Upper Cam
- 226: Downward Block or notch
- 228: Upward Block or notch
- 229: Pin opening plate
- 230: Price Lock portion
- 232: Downward Block or notch
- 234: Upward Block or notch
- 236: Shaft, Upper Cam
- 238: Push Bar, Cam Interlock Arm
- 240: Shaft, Lower Cam
- 242: Push Bar, Lower Cam Price Block Arm
- 244: Rocker
- 246: Lock member
- 248: Groove, carousel lock arm

### INDEX OF ELEMENTS

- 178: Arm, Cam Interlock
- 180: Arm, Carousel Stop
- 176: Arm, Lower Cam Price Block
- 104: Back shell connector lugs
- 12: Base
- 13: Base Plate
- 170: Block, Pin #1 System
- 29: Board
- 58: Bolt
- 109: Box
- 172: Cam, lower
- 174: Cam, upper
- 16: Carousel
- 203: Clip, back shell
- 201: Clip, front shell
- 106: Coin box cavity
- 18: Coin box
- 33: Cover
- 33b: Cover support, back
- 33f: Cover support, front
- 66: Detent
- 76: Detent applicator guide
- 72: Detent guide
- 74: Detent spring
- 78: Detent spring applicator
- 68: Detent support
- 98: Detent track
- 70: Detent wheel
- 86: Detent wheel pin
- 35: Divider guides
- 210: Door 1 Block
- 212: Door 2 Block
- 214: Door 3 Block
- 216: Door 4 Block
- 138: Door cutaway
- 130: Door hole for level 1
- 132: Door hole for level 2
- 134: Door hole for level 3
- 136: Door hole for level 4
- 32: Door lock mechanism
- 30: Door, Level 1
- 28: Door, Level 2
- 26: Door, Level 3
- 24: Door, Level 4
- 150: Door vane
- 226: Downward Block or notch
- 232: Downward Block or notch
- 40: First Level or tier
- 65: Flange
- 46: Fourth Level or tier
- 27: Front cover
- 80: Groove for back shell
- 248: Groove on the carousel lock arm
- 146: Guide or door retainer, upper
- 148: Guide or door retainer, lower
- 182: Guide Rails
- 142: Handle
- 92: Inside circular band
- 218: Interlock Arm Groove
- 164: Lever
- 246: Lock member
- 102: Locking ring
- 194: Lower Cam Door 1 contact point
- 196: Lower Cam Door 2 contact point
- 84: Lower center piece
- 154: Lower edge
- 64: Lower ledge of roller
- 54: Mounting piece
- 36: Permanent Divider
- 160: Pin #1
- 162: Pin #2
- 168: Pin base
- 229: Pin opening plate
- 140: Pin slot
- 224: Price Lock portion, upper Cam
- 230: Price Lock portion, upper Cam
- 238: Push Bar, Cam Interlock Arm
- 242: Push Bar, Lower Cam Price Block Arm
- 177: Push location bar
- 179: Push location shaft
- 96: Race
- 34: Removable divider
- 220: Ridge on lower cam
- 222: Ridge Slot
- 244: Rocker
- 62: Roller
- 60: Roller base
- 56: Roller shaft
- 42: Second Level or tier
- 110: segment assembly
- 50: Shaft
- 48: Shaft hole
- 202: Shaft on lower cam
- 208: Shaft slot, lower cam price block arm
- 240: Shaft, lower Cam
- 204: Shaft, upper cam
- 236: Shaft, upper Cam
- 20: Shell, back
- 22: Shell, front
- 206: Slot, cam interlock arm
- 156: Slot, double
- 171: Slot for Pin #2 System
- 158: Slot, single
- 118: T-groove or T-slot
- 116: T-lug
- 44: Third Level or tier
- 10: Tray
- 108: Tray assembly
- 88: Tray support
- 198: Upper cam door 3 contact point
- 200: Upper cam door 4 contact point
- 82: Upper center piece
- 144: Upper edge
- 228: Upward block or notch
- 234: Upward block or notch

### DESCRIPTION OF THE PREFERRED EMBODIMENTS:

There are seven major components to the snack dispenser: base **12**, the carousel **16,** back shell **20,** the trays **10**, front shell **22,** pin system **160** & **162**, and door lock mechanism **32.**

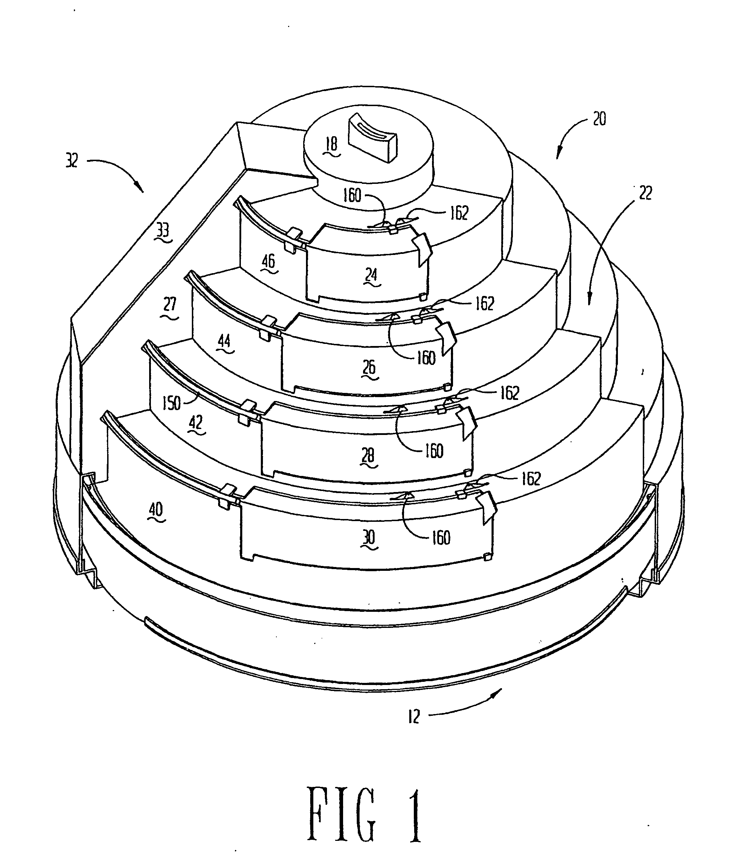

Referring to Fig. 1, the snack dispenser has four circular levels. Each level is similar in many respects. The first level **40** has the largest radius and fourth level **46** has the smallest radius; therefore, the snack dispenser design resembles a "wedding cake". The material used in the prototype was a transparent plastic; however, this material may change depending upon the application desired.

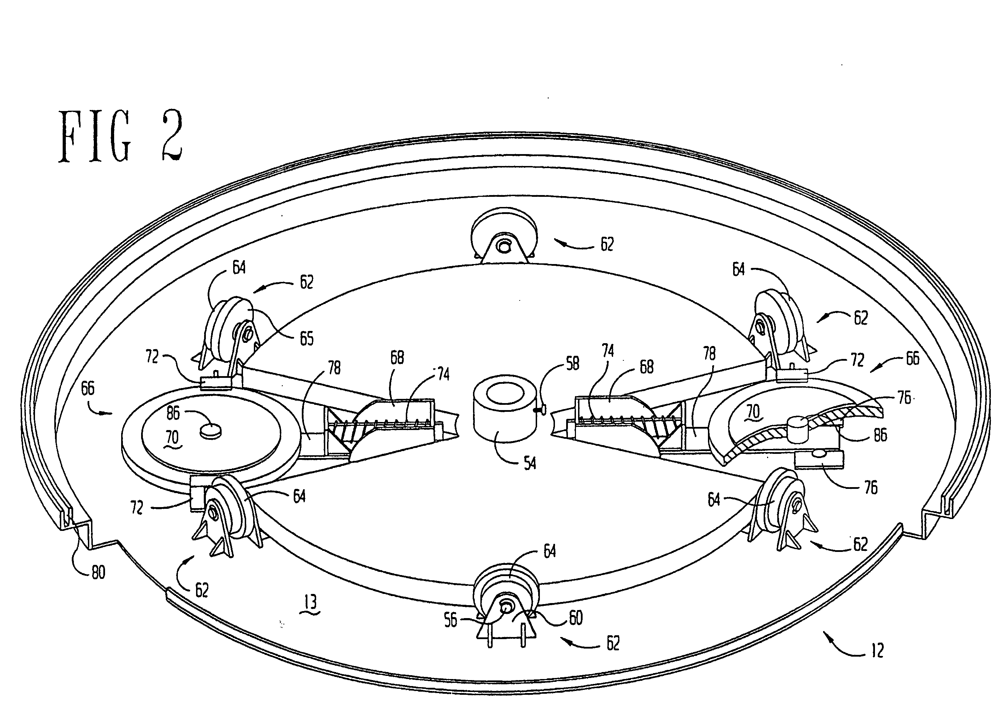

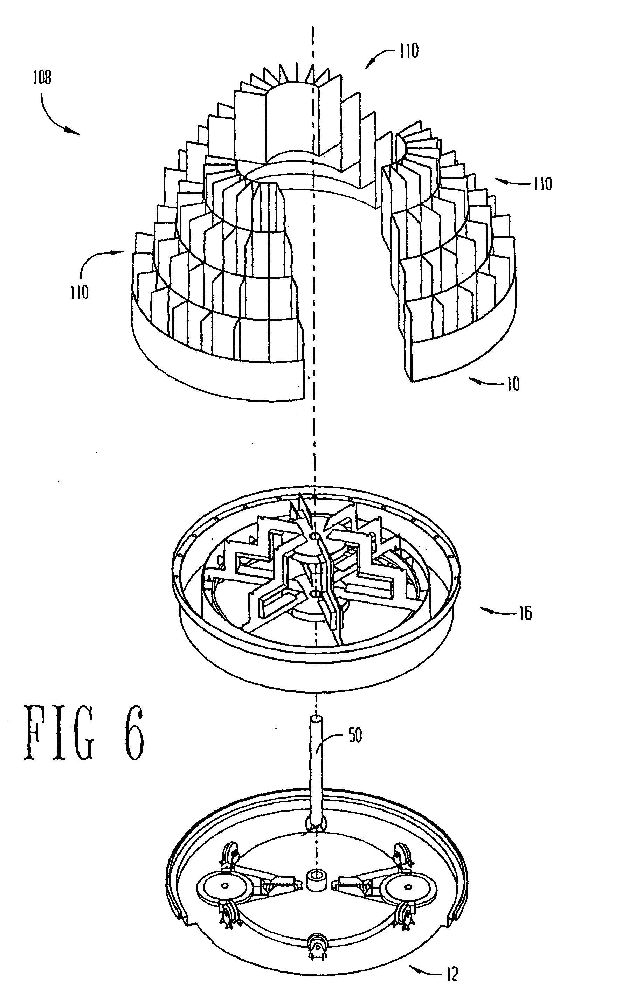

Shown in Figs. 2, 4, 5, and 6, base **12** is the lowest section of the snack dispenser. Shaft **50** is at the center of the base **12.** Shaft **50** is supported by mounting piece **54** on base plate **13.** A bolt **58** through mounting piece **54** holds the shaft in place. The shaft **50** defines the vertical axis of the snack dispenser and enables rotation of the carousel. The carousel **16** and trays **10** of the snack dispenser rotate about this vertical center axis.

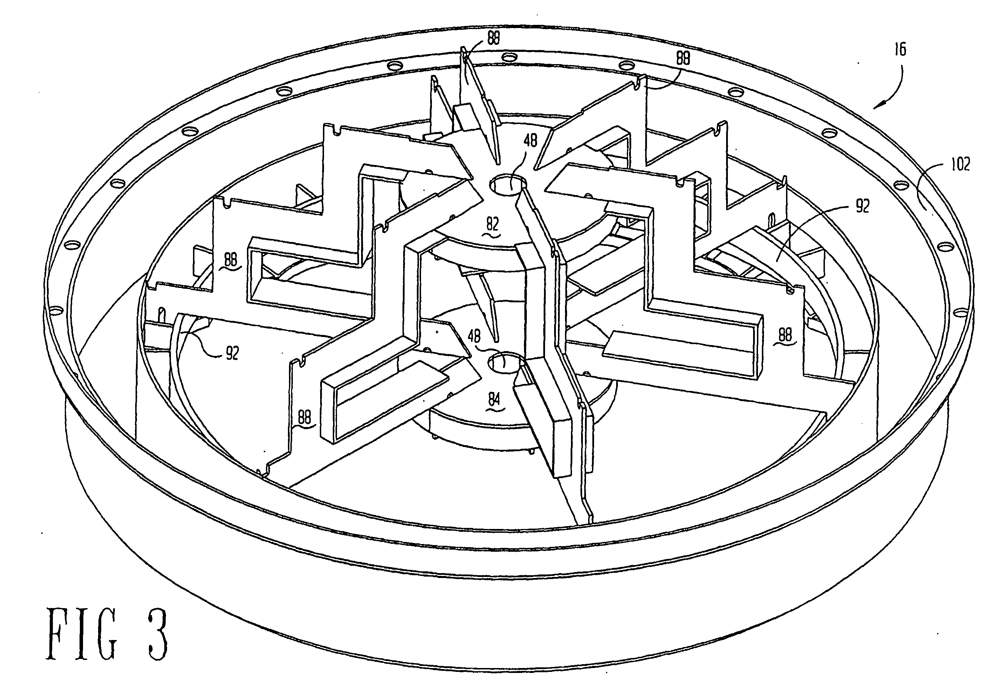

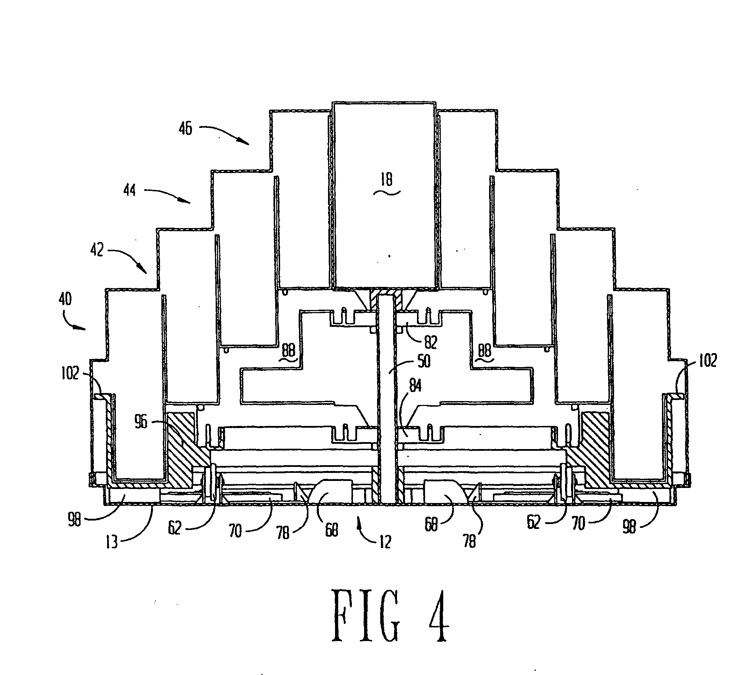

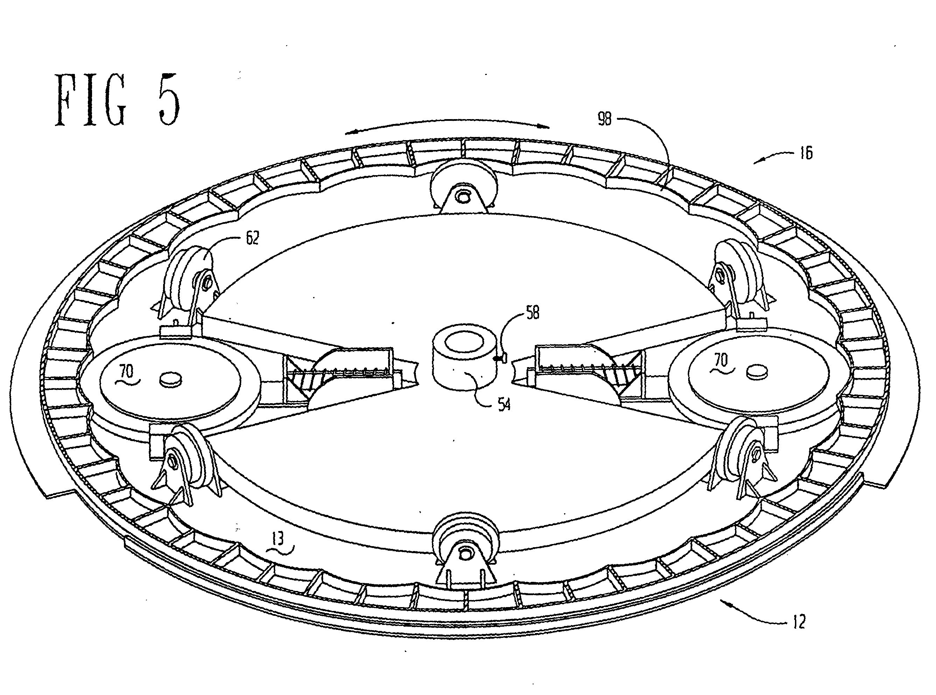

Rotation of the carousel is facilitated by six rollers **62.** Lower ledge **64** of the roller **62** supports the race **96** of the carousel **16.**(Fig. 4) Flange **65** on the roller aids in centering the race **96.** Detent system **66** align stop positions.(Fig. 2 & 5) Each of the detents include the circular detent wheel **70** and spring **74.** Detent wheels **70** ride in the detent track **98** of the carousel **16.** The detent wheel is held in place by detent guides **72;** detent applicator guide **76** mounted on the plate **13** and detent wheel pin **86** on applicator **78.** The spring is held in place by detent support **68** on the plate **13**. The force of the spring is applied to the detent wheel by the detent spring applicator **78.** The purpose of the detent is to facilitate incremental stopping and controlling the carousel. Figures 4 and 5 demonstrate the process by which the detent wheels **70** ride on the detent track **98** of the carousel **16.** Incremental movement of the carousel is possible due to the individual sections in the detent track **98** which allow the detents to only move one single slot **158** length at a time. The customer may rotate the carousel by the use of a locking ring **102.**(Figs. 3 & 4) It will be understood that the detent tract **98** shown in figure 5 is an integral portion of the carousel **16.** Everything above the detent tract **98** is cut away to show the interrelationship between the detents **66** and the detent track **98.**

Fig. 4 shows a cross-section of the entire invention. It will be noted that the cut for this view is not a straight line through the center. Referring to Fig. 2, the cut (upon which Fig. 4 is taken) is somewhat of a zigzag starting with a cut through the center of the left most detent **66,** then proceeding toward the front of the invention. The cut then turns and cuts through the center of the left front roller **62** to the center, and then back out to the right front roller **62,** then through the right most detent **66.** The purpose of the zigzag cut of this figure is to demonstrate not only the interrelationship between the many parts indicated therein but specifically the relationship of the detent **66** to the detent track **98** and the relationship of the roller **62** with the race **96**.

Referring to Figs. 3 and 4, the carousel includes two identical circular center pieces, lower piece **84** and upper piece **82**. The carousel **16** is placed on top of the base **12.** Shaft **50** extends through the shaft hole **48** of each of the center pieces **82** & **84**. The center pieces are supported by six tray supports **88.** The tray supports **88** are attached to an inside circular band **92** on the race **96**. As discussed above, the race **96** is supported by the rollers **62** in order to allow the carousel to move smoothly.

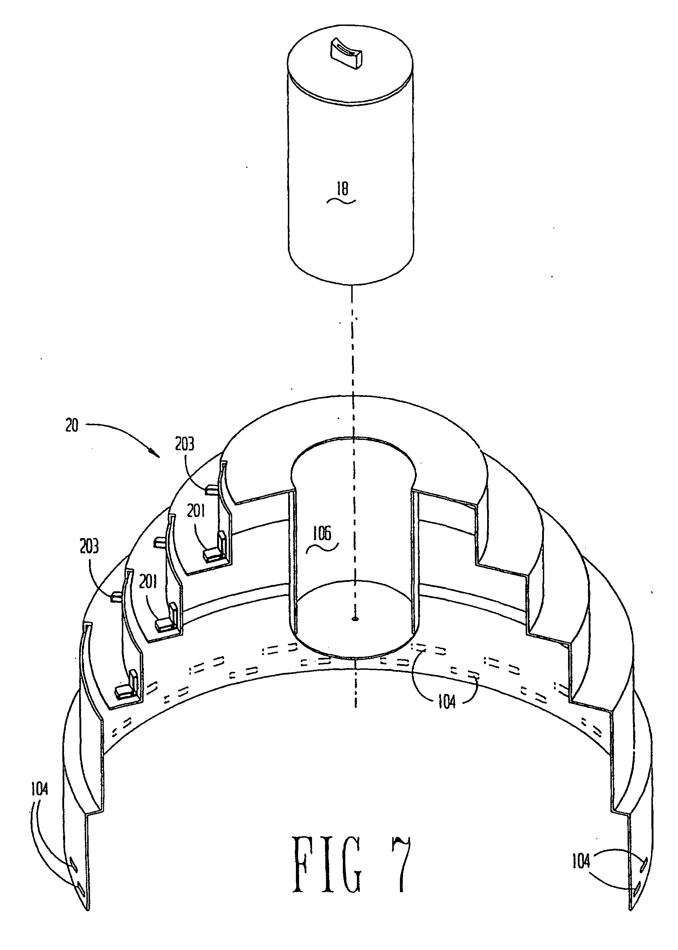

After the carousel is placed onto the base, the back shell **20** is placed in groove **80** located along roughly two thirds of the periphery of the base.(Figs. 2, 4 and 7) The back shell **20** is attached by the connector lugs **104** shown in Fig. 7 in slots (not shown for clarity of drawings) in groove **80.**

Besides providing a portion of an exterior, the back shell supports the coin box **18** inside the coin box cavity **106**. The coin box **18** allows the customer to insert coins into the bank container, which are processed, and then credit information is communicated to the door lock mechanism **32** to ensure that the proper payment has been made for the desired selection. The specifics of the coin box are beyond the scope of this application and are not shown for simplicity.

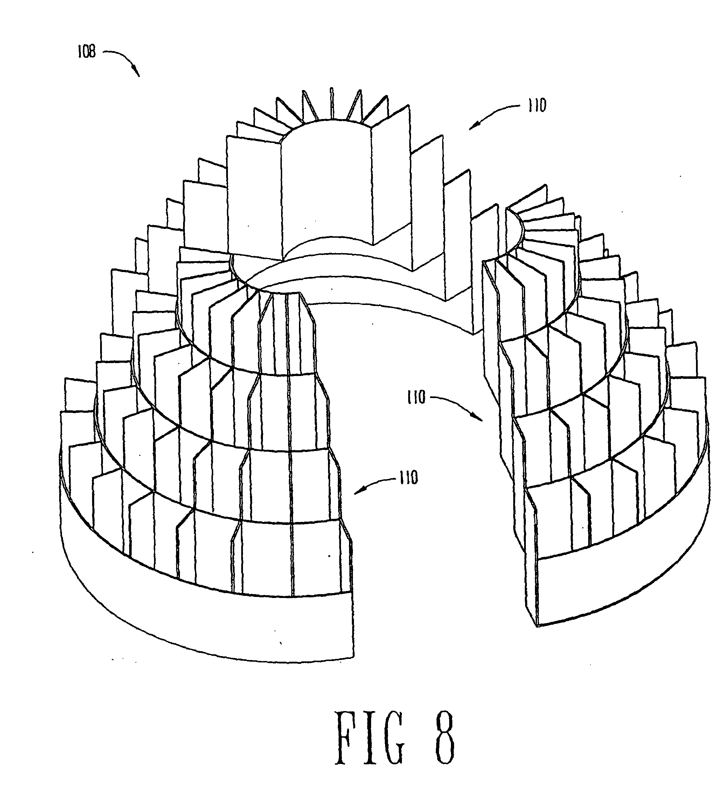

Individual snack items are placed in a tiered tray assembly **108.** (Fig. 8) A tier or level is defined as a row along which the trays are located. Each tray **10** on a particular tier is of identical size proportions. The snack dispenser has four tiers. The four tiers are distinguishable by their diameter and the amount of money required to purchase a snack from the specific tier. The tiered tray assembly **108** in this embodiment comprises three segment assemblies **110.** Each segment assembly spans **120** degrees of the complete circle of the tiered tray assembly **108** of the embodiment shown. It will be understood that any number of segment assemblies could be used, so long as they comprise the complete circle of the tiered tray assembly. With all the trays **10** in place on a particular level, the trays form a circular trough. The term trough indicating that a cross section of the trays would reveal squared bottoms. Circular indicating the square bottom troughs form a complete circle.

In order to accommodate some larger products, the trough width of the top two trays **44** and **46** is greater than the trough width of the bottom two trays **40** and **42.**

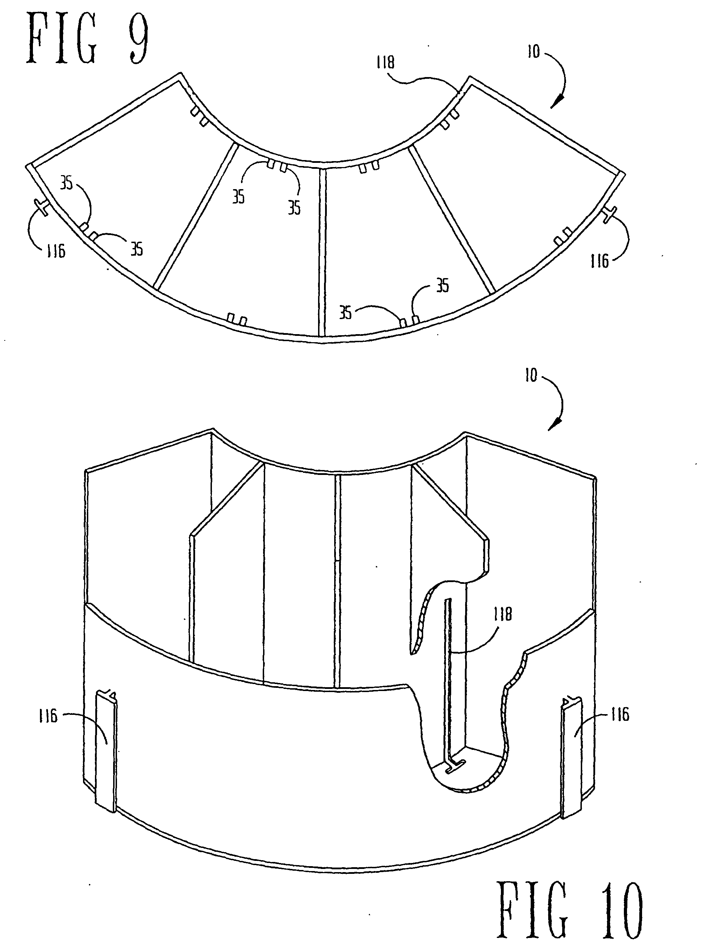

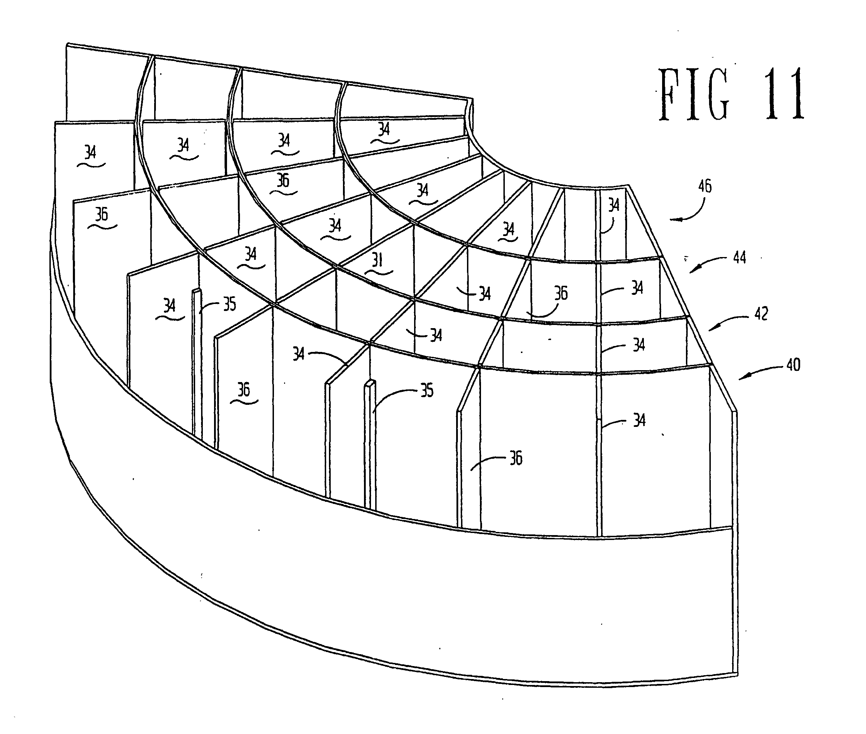

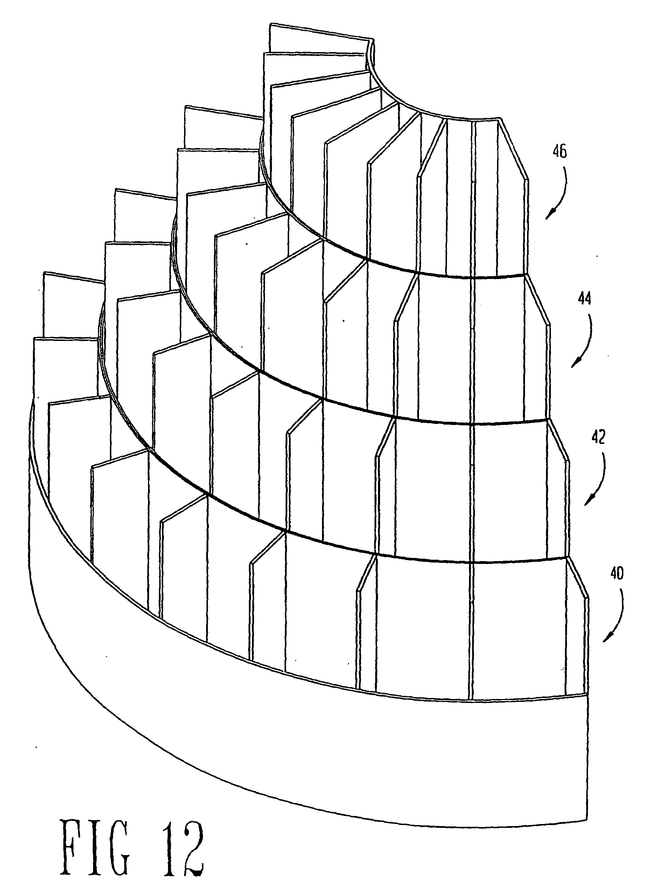

Referring to Fig. 9 and 10, each tray **(42, 44 and 46)** on levels 2, 3, and 4 has T-lugs **116.** Each tray **(40, 42,** and **44)** on level 1, 2, and 3 has T-grooves or T-slots **118.** The process of collapsing and expanding the trays is an interrelationship between the T-lugs and T-grooves. T-lug **116** of one tray is placed first in T-groove **118** of a next larger diameter tray. The T-lug **116** is then extended to the top of the T-groove of the larger tray. This process is repeated for each individual tray until all four levels have been connected to form a segment assembly **110** which resembles Fig. 11 when collapsed, and Fig. 12 when telescoped. The segment assemblies **110** telescoped and placed on the carousel form the "wedding cake" formation shown in Fig. 1 and 4.

Once all three segment assemblies **110** have been added, the front shell **22** is placed on the snack dispenser. The front shell **22** and the back shell **20** mesh and lock to secure the snack vendor. Each horizontal surface of the back shell **20** has grooves or slots on the edges closest to the front cover and away from the door lock mechanism **32.** The front shell **22** has complimentary protrusions that fit into the grooves or slots of the back shell **20.** Thus, locking the front and back shells to secure the snack vendor is accomplished by placing the front shell **22** slightly overlapping the back shell **20** on the side opposite the door lock mechanism **32.** As seen from above then, the front shell **22** is rotated clockwise such that the protrusions on the front shell **22** complimentary to the grooves or slots on the back shell **20** lock into place. Further, this clockwise rotation moves a portion of the front shell **22** on the door lock mechanism **32** side to be under a portion of the door lock mechanism. This portion of the door lock mechanism is locked in place at this location by any of a number of various locking techniques.

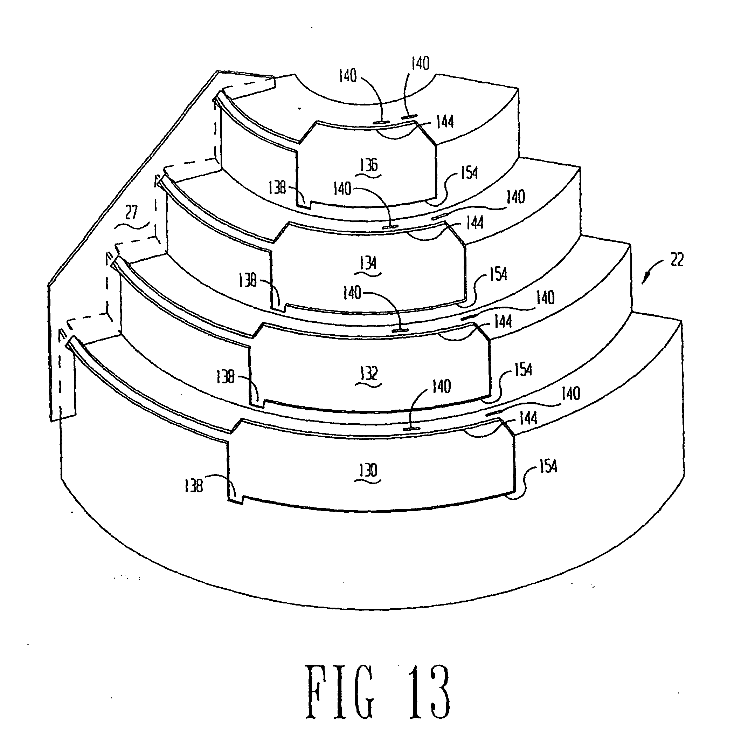

The front shell has four door holes **130, 132, 134,** and **136.** (Fig. 13) Each door hole has one door cutaway **138,** to allow the door to snap into the door slots and be easily removed, two upper door guides **146** and two lower door guides **148**.

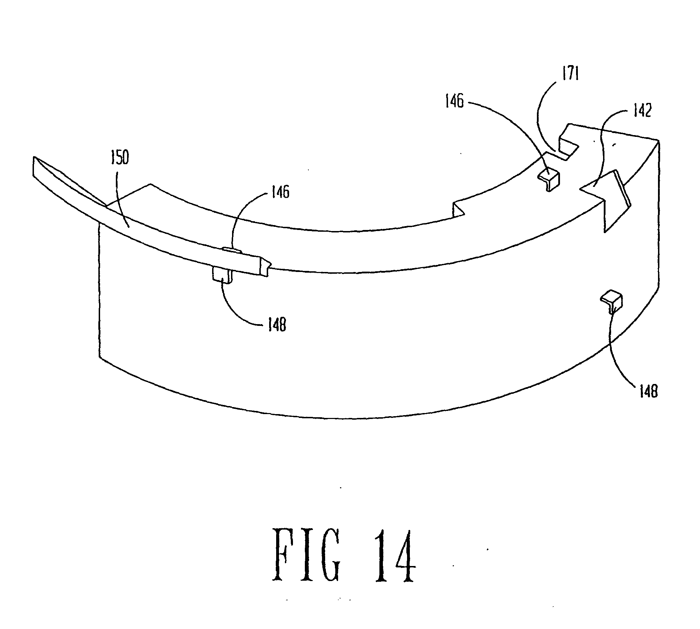

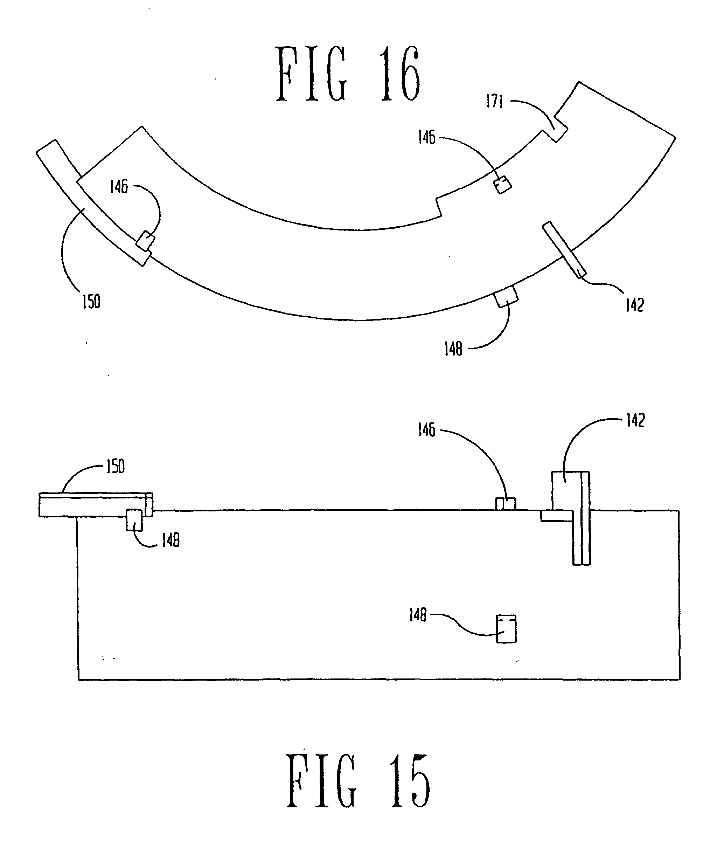

A door is illustrated in Fig. 14, 15, and 16. It will be understood that the drawing figures are representative of all four doors **24, 26, 28** and **30** (Fig. 1). Each door will have a different radius of curvature and length, and there are two different widths, but they will all be proportionally the same. Each door has a handle **142** which is used for sliding the door in the lateral arc. The following embodiments regarding a method and devices for securing sale articles in slots are not claimed with this application. The guides **146** and **148** are used to ensure that the door will not get out of alignment or be difficult to open. Guides **146** slide along edge **144.** (Fig. 13) Guides **148** slide along edge **154.** Door vane **150** is used to guarantee that the door can only open to the maximum length of a slot. For instance, if the snack selected is in a double size slot **156**, the door vane **150** will hit against the back shell **20.**

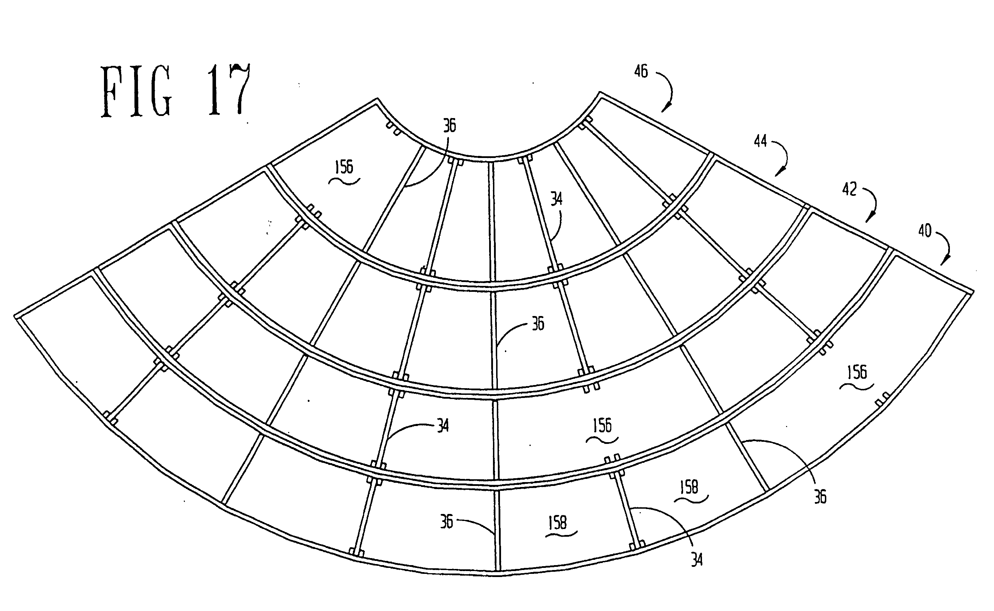

Each individual tray is further divided into individual slots **156** and **158** as shown in Fig. 17. The slots are defined by both permanent **36** and removable dividers **34.** (Fig. 11 & 17) The removable dividers are inserted or removed to allow for either single slot **158** or double slot **156** sized compartments. As seen in figures 11 and 17, the removable dividers **34** are held in place by divider guides **35**. The perspective view of figure 11 shows some of the divider guides **35**, but not all of them are shown for simplicity of the drawing. It will also be noted that although in this embodiment of the invention each slot is capable of division into two slots by placement of the removable divider **34**, it is not necessary that each and every full size slot be divisible.

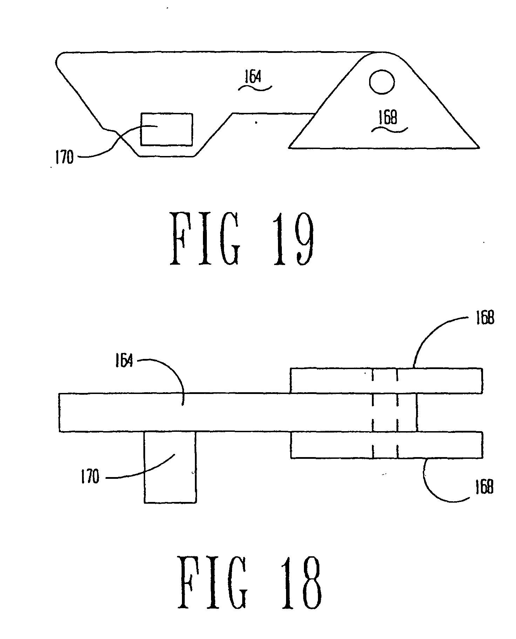

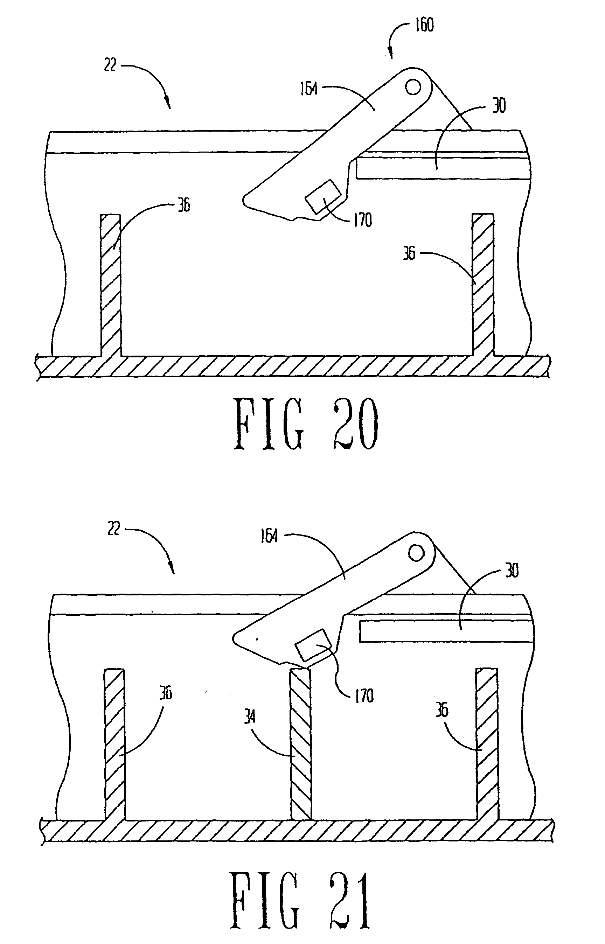

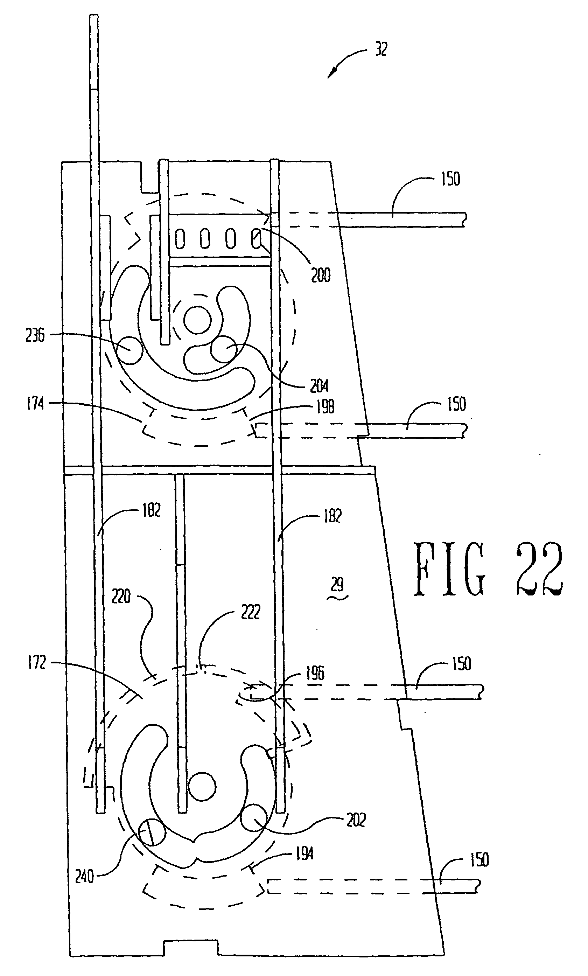

If the snack is in a single size slot, the snack dispenser uses a pin mechanism to control the doors. Each door has two pins which control the door. Pin #1 **160,** as seen in Fig. 1, is used to allow the door to only open to the length of a single slot if the snack selected by the customer is in a single slot **158.** Fig. 18 through 21 shows a schematic of the pin system. Fig. 21 depicts the process by which pin #1 **160** will be used to stop the door if there is a single slot **158** space. As seen in Fig. 20, lever **164** and block **170** of the pin #1 **160** are angled downward because there is not a removable divider **34** present in that position. Thus, the door will open to the length of a double slot **156** because the door will be impeded only by the door vane **150** hitting the back shell **20.** However, if the divider **34** for a single slot **158** is present, pin #1 **160** will be elevated by the divider and thus the block **170** will stop the door. (Fig. 21) The purpose of pin #1 is to ensure that someone who chooses an article in a single slot **158** will only have access to a single width snack and will not be able to take additional snacks from adjacent locations. Figures 20 & 21 show the door portion to be door 1 **30,** but the same principle applies on all the doors.

Pin #2 **162**, shown in Fig. 1 is used to ensure that the carousel is properly aligned. If the dividers are aligned so that the customer has access to a snack (whether that snack is in a single or double size slot), pin #2 **162** will rise and allow the door to open. However, if the pin is not aligned properly with a divider, a block similar to block **170** of pin #1 will fall into slot **171** on the doors and ensure that the door cannot open. The process by which pin #2 **162** works is the same as the process described above for pin #1 **160.** Although not shown for clarity, each of pin #1 **160** and pin #2 **162** is covered such that no tampering with the levers of each six system can occur which would thereby bypass their functions.

The levers **164** are pivoted to pin bases **168** mounted on front shell **22.** The lever of pin #2 **162** are mounted in reverse or mirror image to pin #1 **160.**

The following embodiments regarding a door lock mechanism are not claimed with this application.

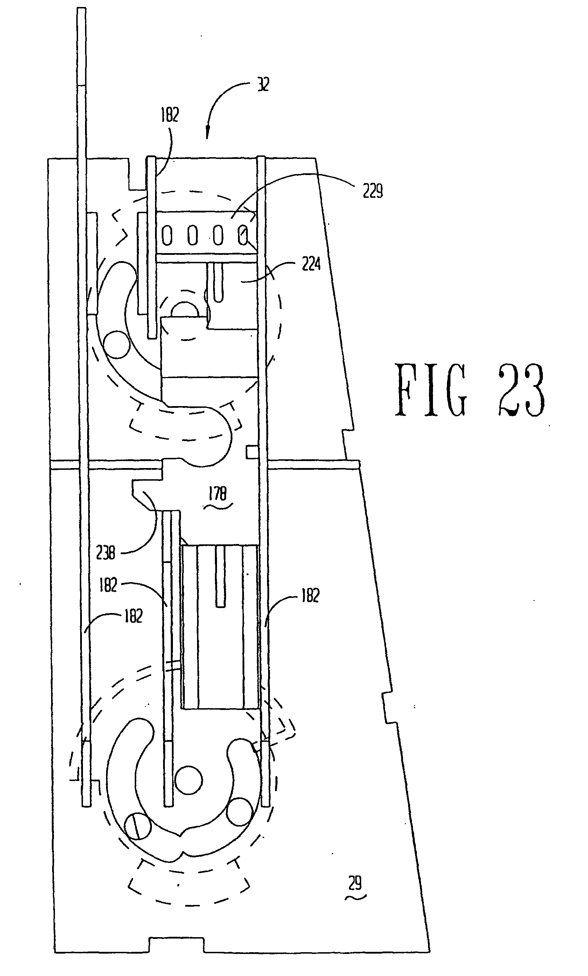

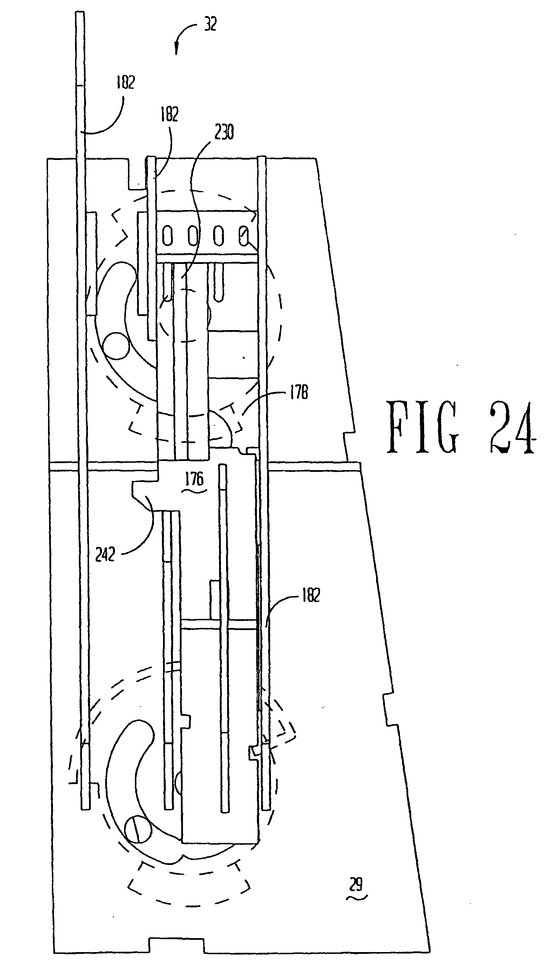

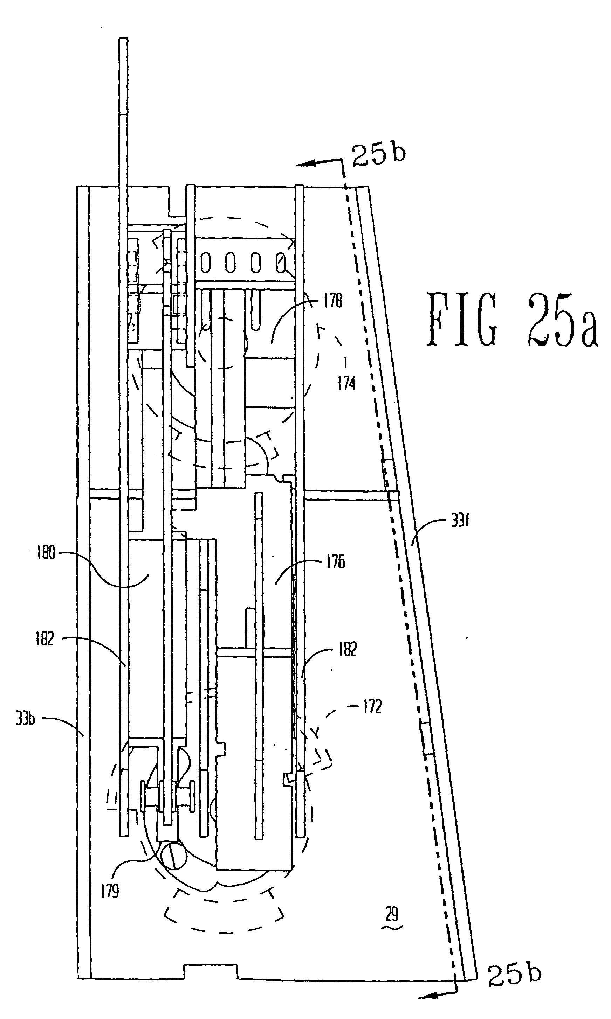

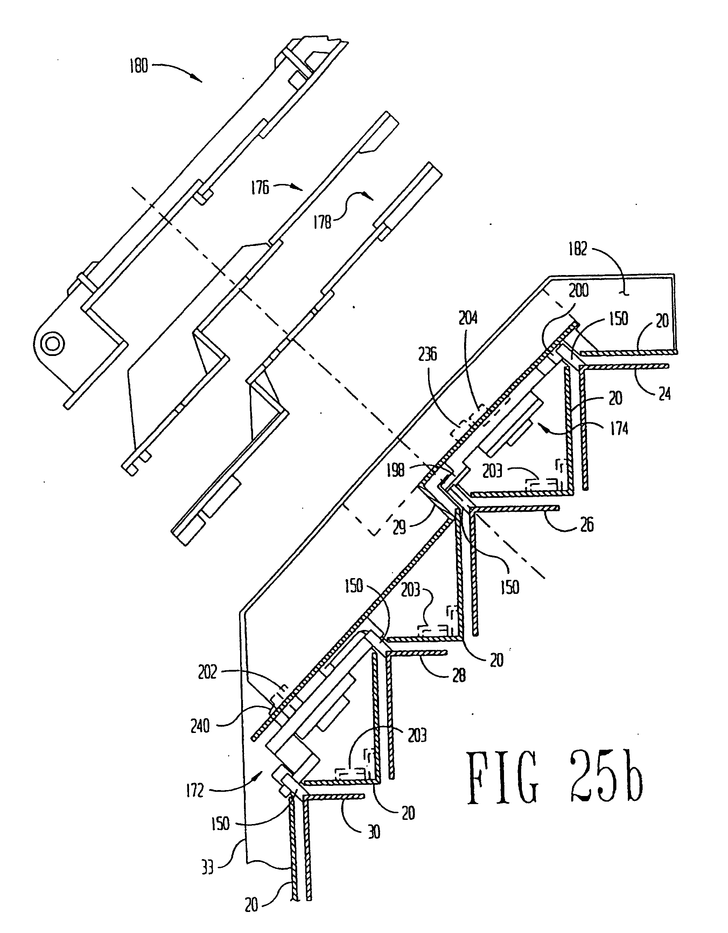

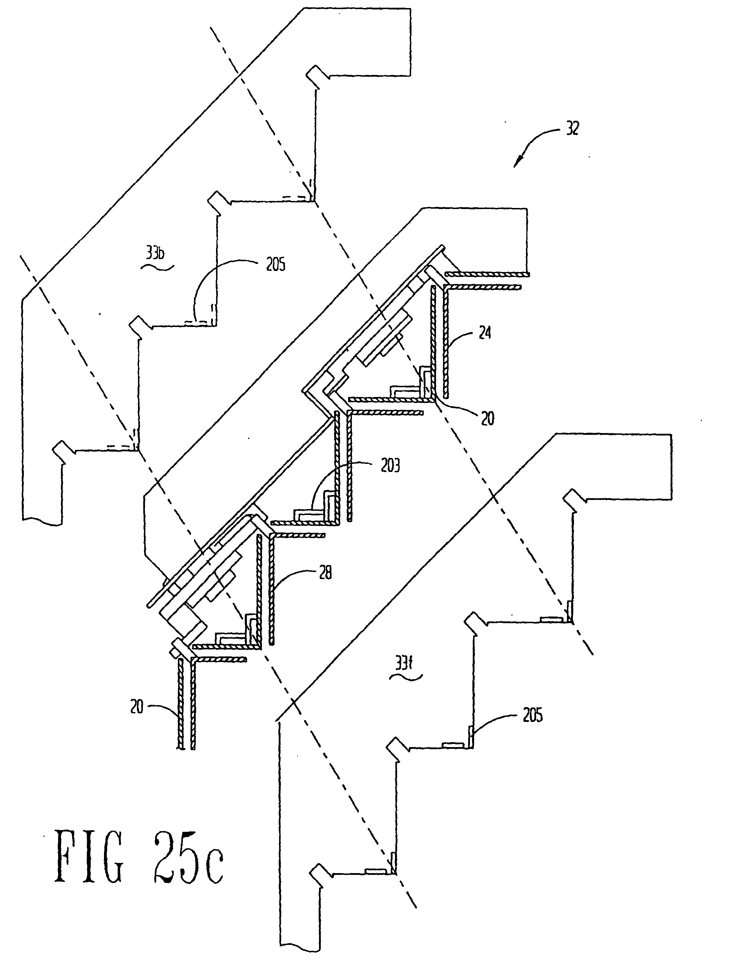

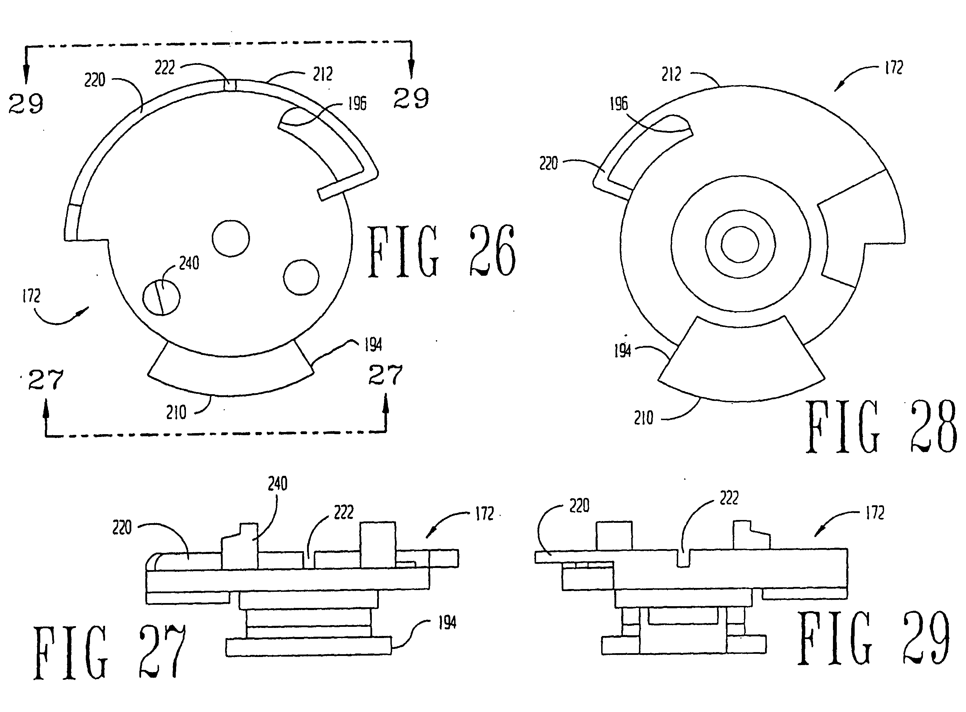

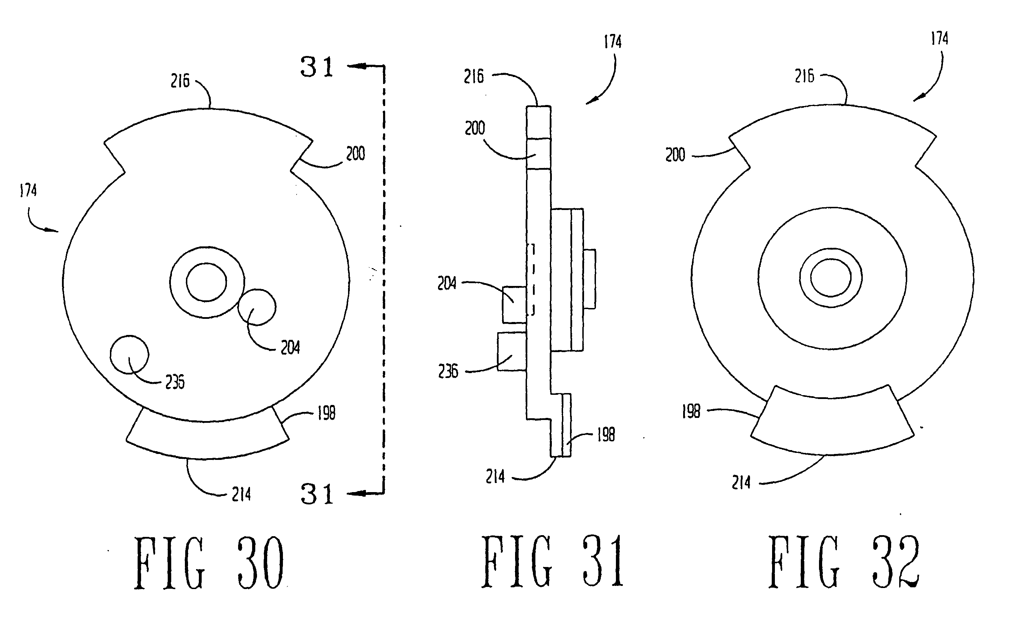

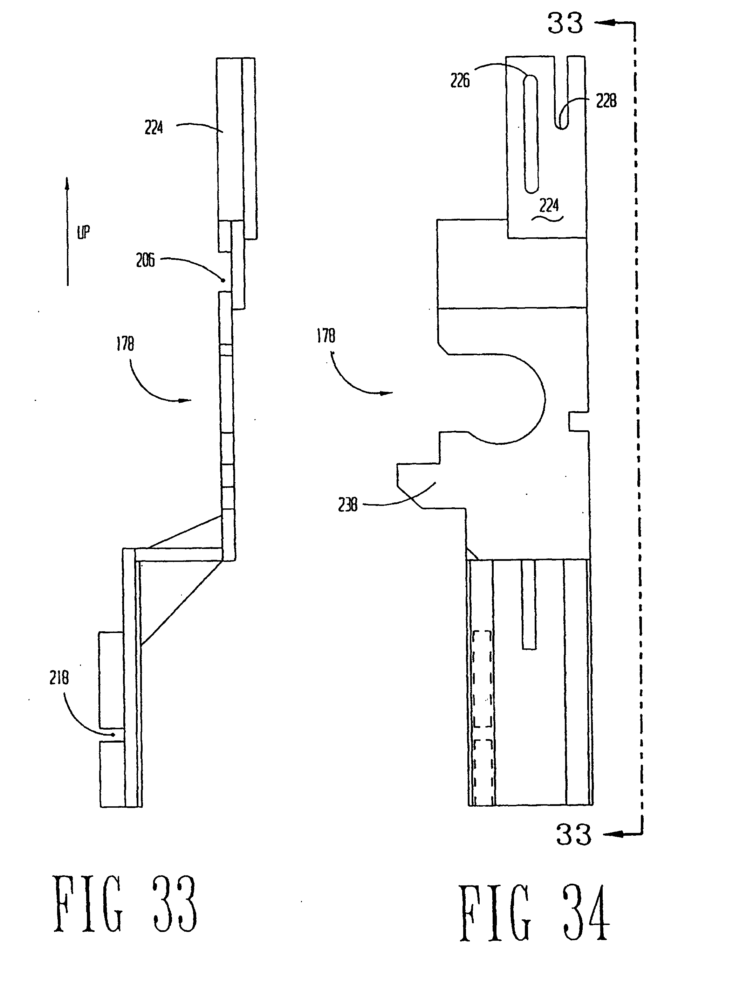

Doors are controlled by the door lock mechanism **32** (Figs. 22 - 25). The door mechanism is located on the side of backshell **20.** Although shown on Fig. 1 it is not shown on Fig. 7 for clarity. The mechanism **32** is covered by cover **33,** partially on the front shell **22.**(Fig. 13) The door lock mechanism comprises lower cam **172,** upper cam **174,** (Figs. 26 - 32) and three different arms **176, 178,** and **180.** (Fig. 33 - 39).

The door lock mechanism **32** serves the following functions: 1) it holds all doors closed until the proper amount of money has been entered; 2) unlocks individual level doors upon receiving the correct amount of change; 3) locks the carousel in position when any door is open to eliminate the possibility of a person emptying an entire row of snacks after opening a door; 4) once any door is open, the mechanism keeps the remaining doors from opening; and 5) resets the change counter after a door is opened.

The cam **172** and **174** are mounted for rotation on stubs on board **29.** The board is attached to the back shell **20.**

The upper cam **174** interlocks the doors for the fourth level **46** and the third level **44**. The lower cam **172** interlocks the doors for the first level **40** and the second level **42.** The interlocking feature among these two groups operate substantially the same. As a door is opened, the door contacts its appropriate cam and rotates that cam. This cam rotation moves a portion of the cam to block the opening of the second door in the group. More specifically then, referring to Fig. 26 there will be seen the lower cam **172.** Further, the figure shows the contact point **194** for door one and the contact point **196** for door two. Vane **150** of a level's respective door is what actually contacts the contact points. As the door on the first level is opened, lower cam **172** is rotated by the door pushing at location **194.** This rotation of the lower cam **172** rotates the door 2 block **212** such that the level 2 door cannot be opened. Operating the other way, opening the second level door **28** rotates the lower cam **172** in a counter-clockwise direction. This counter-clockwise rotation moves the door 1 block **210** such that door 1 may not be opened. The same description applies to the interlocking mechanism of the upper cam **174** in relation to the level 3 and level 4 door, **26** and **24** respectively. It will be understood that vane **150** of a door only rotates its respective cam less than **90** degrees before slipping past the cam yet still holding it in the rotated position. The slipping of the vane **150** past the contact point is most prevalent when opening a door over a double slot, but could be present to some degree even when opening a door over a single slot.

The upper and lower cams not only interlock doors 3 and 4 and doors 1 and 2 respectively, they further interlock with each other to allow only one door to open at any one time. Interlocking between the cams is accomplished by the cam interlock arm **178** shown in Figs. 33 and 34. The cam interlock arm **178** connects to the upper cam **174** via a shaft and slot mechanism; specifically, shaft **204** on the upper cam **174** slides into slot **206** on the cam interlock arm **178.** Rotation of the upper cam **174** translates the cam interlock arm **178** up and down. Counter-clockwise rotation of the upper cam **174** moves the cam interlock arm **178** up as shown in figure 33. This counter-clockwise rotation is caused by opening the door on the fourth level. Clockwise rotation of the upper cam **174** causes the cam interlock arm **178** to move down. Clockwise rotation of the upper cam **174** is caused by opening the door on the third level. It will be understood then that any rotation of the upper cam **174** causes a corresponding translation in the cam interlock arm **178.**

The cam interlock arm **178** interacts with the lower cam **172** via a ridge and groove function. More specifically, the interlock arm groove **218** interacts with the ridge **220** on the lower cam **172.** With all the doors in the at-rest position, i.e. all the doors closed, the ridge **220** aligns with the interlock arm groove **218** such that the lower cam **172** is free to move rotationally. Further, in the at-rest position, the upper cam **174** is free to rotationally move because the cam interlock arm groove **218** is aligned with the ridge slot **222** of the lower cam **172.**

Interlocking between the cams is accomplished in the following manner: rotation of either the lower cam **172** or the upper cam **174** effectively blocks rotational movement of the other cam via the cam interlock arm **178.** When either the level 1 door **30** or the level 2 door **28** is opened, the lower cam **172** rotates as previously described. This rotation causes the interlock arm groove **218** to ride along the lower cam ridge **220** such that the cam interlock arm **178** cannot translate up or down. When the cam interlock arm **178** is not able to move in either an up or down direction, this effectively stops the upper cam **174** from any rotational movement; therefore, the upper doors cannot open when the upper cam is not free to rotate.

Interlocking between the upper cam **174** and the lower cam **172** is again accomplished by the cam interlock arm **178**. As the upper cam **174** is rotated, as caused by the opening of either upper door, the cam interlock arm **178** translates down or up as caused by the shaft **204** moving in the slot **206** as previously described. This movement causes a misalignment of the interlock arm groove **218** with the lower cam ridge **220** by movement of the interlock arm groove **218** in the ridge slot **222.** Because of this misalignment of the interlock arm groove **218** and the ridge **220,** the lower cam **172** is stopped from any rotational movement; therefore, the lower doors are blocked from opening. It will be noted in this configuration the doors are not blocked by the door block **210** or **212,** but instead are kept from opening by contacting the cam contact points **194** and **196.**

The cam interlock arm **178** serves another function; namely, it further acts as a price level release by operation of the price lock portion **224**. The price lock portion **224** consists of a downward block **226** and an upward block **228.** Using these blocks, the coin counting mechanism (not described here) releases individual levels as money is added to the system. If the cam interlock arm **178** is blocked from movement in either the upward or downward direction, this effectively blocks opening of the level 3 door **26** and level 4 door **24** respectively.

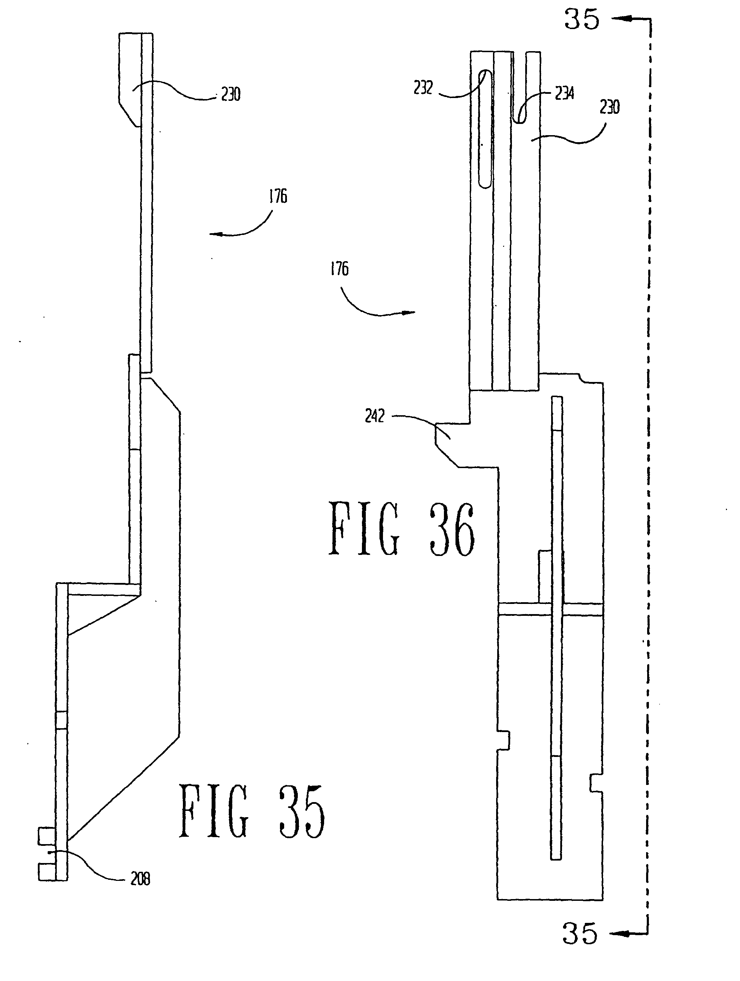

Figs. 35 and 36 show the lower cam price block arm **176.** The lower cam price block arm **176** serves two functions: 1) to block the lower level doors from being open before an appropriate amount of money has been entered; and 2) to operate the carousel stop arm **180.**

The lower cam price block arm **176** accomplishes price level locks via the price lock portion **230.** Just like the price lock portion **224** on the cam interlock arm **178,** the price lock arm **230** consists of a downward block **232** and an upward block **234.** If the lower cam price block arm **176** cannot move because of a impediment in either the downward block **232** or the upward block **234** location, this effectively stops the lower cam **172** from rotating. This rotational block keeps the lower doors from operating by blocking them against the contact points **194** and **196.** The lower cam price block arm interacts with the lower cam by operation of shaft slot **208** with shaft **202** of the lower cam.

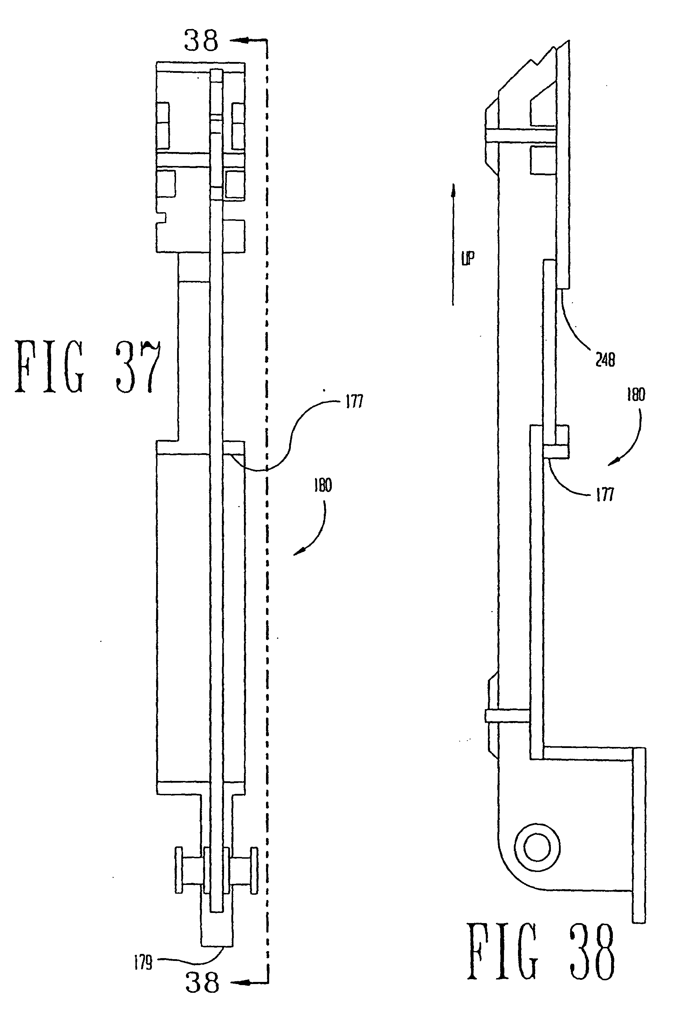

Referring to Figs. 37 and 38 there will be seen the carousel stop arm **180.** The carousel stop arm **180** serves three functions: 1) to lock the carousel in place such that it may not be rotated while any door is open; 2) to reset the change counter; and 3) identify from which level a snack has been purchased.

Regardless of which door is open, and correspondingly regardless of which cam is rotated, the carousel stop arm **180** translates in the upward direction with the opening of the door as indicated in Fig. 38. When the upper cam **174** is rotated in the clockwise direction, i.e. opening the third level door, the carousel stop arm **180** is forced upward by operation of shaft **236** on the upper cam **174** in groove **248** on the carousel stop arm **180.** The shaft **236** is positioned in groove **248** such that it only contacts the upper portion of groove **248** during clockwise rotation of the upper cam **174**. During counter-clockwise rotation of the upper cam **174,** the shaft **236** does not contact any sidewalls of groove **248.** Upward translation of the carousel stop arm **180** during counter-clockwise rotation of the upper cam **174** is accomplished by operation of the push bar **238** on the cam interlock arm **178** pushing at push location **177** as shown in Figs. 37 and 38.

Restated then, upward movement is caused by operation of the shaft **236** in the groove **248** when the upper cam **174** is rotated in a clockwise direction. Upward movement of the carousel stop arm **180** when the upper cam is rotated in the counter-clockwise is caused by operation of the push bar **238** of the cam interlock arm **178** pushing on the carousel stop arm **180** at location **177**.

Likewise, the carousel stop arm **180** is forced upward with each movement of the lower cam **172**. When the lower cam **172** is rotated in the clockwise direction, shaft **240** interacts with the carousel stop arm at location **179** to force it upward. When the lower cam **172** is rotated in the counter-clockwise direction, the push bar **242** on the lower cam **172** price block arm **176** operates to force the carousel stop arm **180** in the upward direction by pushing on the carousel stop arm **180** at location **177**.

It is this upward movement of the carousel stop arm **180** that resets the change counter upon the opening of a door on any level. In this regard, the carousel stop arm could equally be called a clear credit arm.

As a statement of how a simple coin control would operate it will be understood that before any money is inserted that all arms will be blocked by pins **312** (Fig. 41) inserted through notch **226** against downward block **226,** through notch **228** against the upper block **228,** through downward notch **232** against downward block **232**, and through upward notch **234** against upward block **234**.

Referring to Figs. 41 and 42 which show that when an activating force through an element **318** moves against arm **316** of lever **310** that the lever **310** will pivot about pivot shaft **320** compressing spring **314**. This pivoting motion will withdraw pin **312** from one of the notches selected from notches **226, 228, 232** and **234**. As previously disclosed the withdrawal of the pin **312** permits the door to open to dispense a snack. A coin controller in the coin box **18** has the mechanism to provide the activating force to move a selected element **318**. The selected element is on the basis of the value of coins deposited. Coin controllers to select the activating force are known. See for example STONER et al, U.S. Patent 2,934,192.

As previously described, the opening of a door will move arm 180 to clear the credit. The clearing of the credit will remove the activating force to hold the element **318** against the arm **316.** Then the spring **314** will rotate the lever **310** so that the pin **312** is again reinserted against notches.

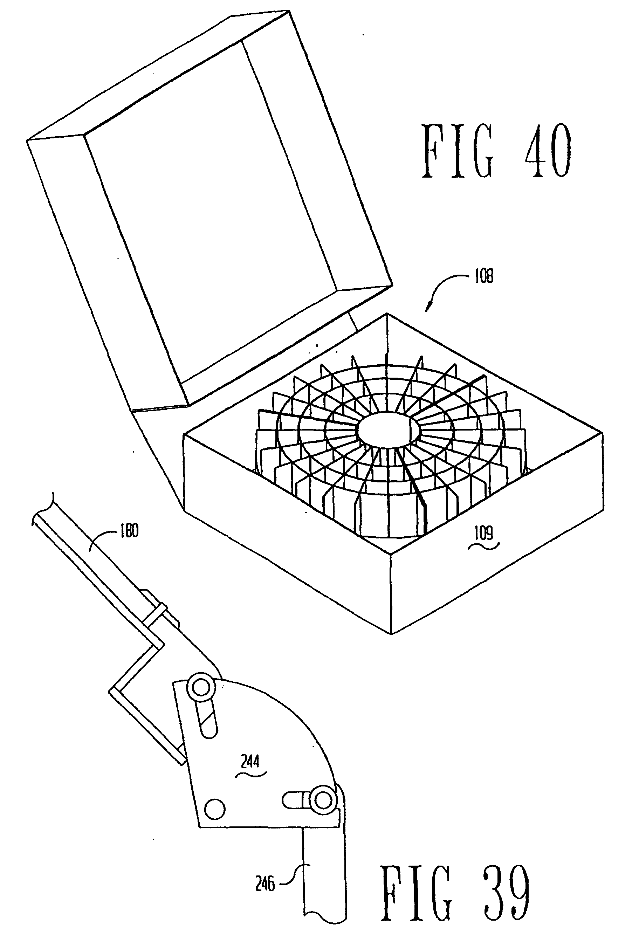

Further, and as the name implies, the carousel stop arm **180** locks carousel rotation with each upward movement. The carousel lock arm is one in a series of members that locks the carousel in place responsive to opening of a door on the vending unit. As previously mentioned, the carousel lock arm translates upward upon the opening of any door. This upward translation locks rotation of the carousel by rocking rocker **244** which translates up lock member **246**. The interplay between these pieces is shown in figure 39. Lock member **246**, when translated upward, locks rotation of the carousel by sliding a pin or shaft in the holes of the locking ring **102.**

Although not indicated in the drawings, there exists a spring physically connected to lock member **246.** The spring tension tends force lock member **246** toward the base **12** of the invention which is an unlocked position of the carousel. The force created by this spring propagates upward through the lock member **246,** rocker **244** and carousel stop arm **180** to provide a force to return to a beginning position. By the same mechanisms that force the carousel stop arm **180** up with the opening of any individual door, the spring connected to the lock **246** then tends to close any door that is open.

Guide rails **182** on board **29** guide the arms **176, 178,** and **180.**

It will be understood that how far up the carousel stop arm translates up varies depending on which door is opened. It is the variance in translation length that is used to identify from which level a vend has taken place. This information can be read in by and stored in relatively inexpensive electronic circuitry for later analysis.

The board is attached to front cover support **33f** at the front and to back cover support **33b** at the back. Basically, these supports are identical in size and shape too and rest upon the front cover **27.** However, the front cover **27** does not provide the support of elements **33f** and **33b**. The cover clips **205** on the covers **33f** and **33b** will match the front and back shell clips **201** and **203.** The cover **33** will fit with the covers **33f** and **33b.**

A unique characteristic of the tray system is that the segment assemblies **110** expand telescopically to form a "wedding cake" design, but also can collapse into a flat conformation, whereby each tray is of near identical height. The primary advantage of this tray system is that the snack replenisher (i.e. the person who will maintain the snack dispenser) can efficiently and quickly exchange the deplenished segment assemblies with replenished segment assemblies by simply removing the deplenished ones from the snack dispenser, collapsing them, and replacing the deplenished segment assemblies with replenished ones.

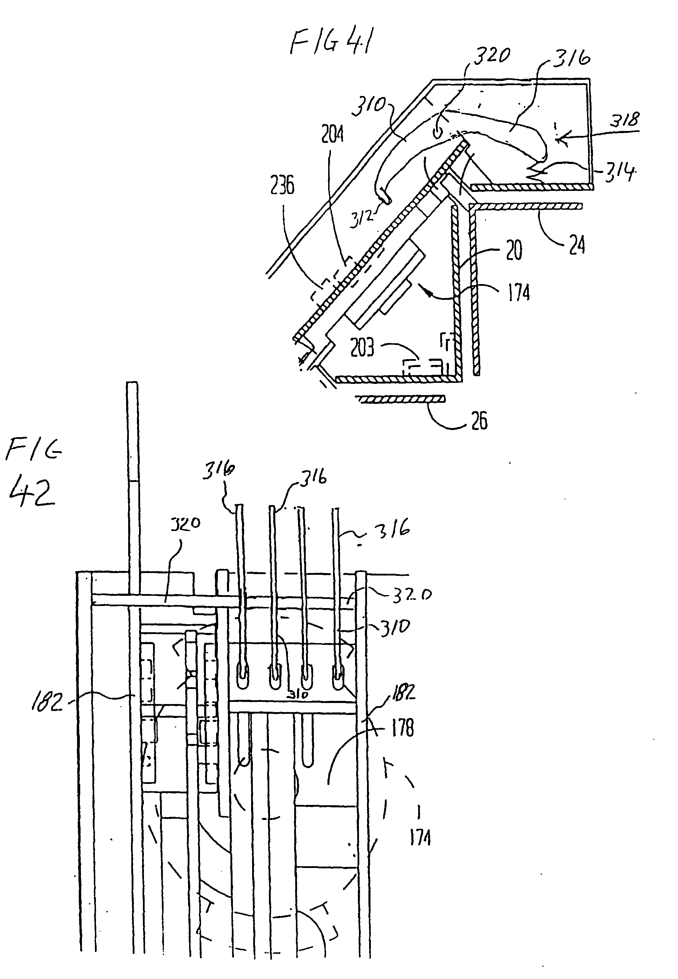

Therefore, replenishing the snack dispenser as described by this invention comprises the following steps: 1) removing the front shell **22** (thus opening the snack dispenser); 2) revolve the carousel so one segment assembly **110** is at the open gap of the back shell **20**; 3) remove the deplenished segment assembly from the snack dispenser; 4) collapse the deplenished segment assembly and place it in a box **109;** (Fig. 40) 5) telescope a replenished segment assembly; 6) place the telescoped segment assembly in the snack dispenser; 7) repeat steps three to six until all the deplenished segment assemblies have been replaced; 9) exchange the full change receptacle with a replenished change receptacle; and 10) place and lock the front shell back **22** on the snack dispenser.

The box **109** shown in Fig. 40 is somewhat of a specialty item. The internal dimensions of the box need to be great enough to allow the insertion of the collapsed segment assemblies **110.** The segment assemblies **110** should be placed in the box to form a circle. A full coin box **18** from a replenished snack vending machine will be placed in the center of the box in the hole created in the center of the segment assemblies **110.** So that only one box would be required to be carried in to replenish a snack vendor, the lid of the box should be sized to hold the same elements as just described when open. In that regard, a person replenishing a snack vendor would open the box cover and fold it around to be substantially on the same plane as that portion of the box holding the replenished segment assemblies **110** and empty coin box. As the deplenished segment assemblies are removed from the snack vendor they are placed in what was formally the lid of the box. Once all the replenished segment assemblies are placed in the snack vendor and the deplenished segments assemblies are placed in what was the lid of the box, along with the full coin box, what was the base of the box now becomes the lid and is folded over to cover the deplenished segment assemblies and full coin box.

The boxed collapsed segment assemblies can be easily stacked on top of the other boxed segment assemblies and returned to the snack distributor to be replenished with new snacks.

According to known technology, a battery powered electronic device within the coin box **18** can readily determine and accumulate the value of the coins which are deposited in the box. Also the electronic device can readily read an identification indicia located on the top of the shaft **50** upon which the coin box **18** rests. Thus personell at the replenishing area can verify the actual money in the coin box with the total value which has been accumulated from the coins. Likewise, the electronic device can record the number of movements of the respective arms that are moved with the opening of the doors. In this way the replenishing center personell can correlate the number of snacks on each level and price level which have been vended with the physical number left in the replenished tray. With this information, the overpay can be easily calculated as well as the price variety of snacks that are being vended at each of the locations according to the data obtained.

Purchasing a snack from the vending unit will then comprise the following steps: 1) A potential customer would approach the vending unit and survey the snacks contained under the transparent front shell by turning the carousel with that portion of the exposed lock ring; 2) The potential customer would then position the desired item underneath the door; 3) The customer would then place money in the coin box where said money will be summed (coin box internals not described in this application); 4) As money is added to the coin box, individual level doors are released when the sum of the money entered is equal to or greater than the money required to open a door on that particular tier; 5) The customer opens the door above the item desired; 6) The customer removes the desired item from the slot; and 7) The customer releases the door whereupon the spring associated with a lock member returns parts to an opening position. All the doors are again locked closed until the cycle can be repeated.

By the above specifications and drawings, one with ordinary skill in the art will understand how to make and use the invention as described. At this time the description above includes the best mode known to the inventor of carrying out his invention.

The restrictive description and drawings of the specific examples above do not point out what an infringement of this patent would be, but are to enable one skilled in the art to make and use the invention. The limits of the invention and the bounds of the patent protection are measured by and defined in the following claims.

It will be understood the term "mechanically" as used herein means the function or method step is accomplished by movement of purely structural elements as opposed to electrical wiring and solenoids moving said elements. In other words, mechanical or mechanically as used herein specifically excludes the use of any electrical signal or device.

## Claims

1. A method of replenishing a snack vendor (12, 16, 20, 110) with articles comprising the steps of:
a) unlocking a shell (20) over the depleted tiered tray assembly (108),
b) removing the shell (20), then
c) removing a depleted tiered tray assembly (108) from the snack vendor,
d) collapsing the depleted tray assembly (108) to substantially uniform level height conformation
e) procuring a replenished collapsed tiered tray assembly and an empty coin box (18),
f) telescoping a replenished tray assembly from uniform level height conformation to a tiered conformation (108),
g) placing the replenished tiered tray assembly in the snack vendor,
h) exchanging a coin box (18) in the vendor with the empty coin box (18),
i) placing all removed components in the box,
j) replacing the shell (20) and
k) locking the shell.

2. A method of displaying articles for purchase in a snack vendor (12,16,20,110) comprising:
a) placing some of the articles in slots (156,158) formed by segmenting (34,36) a lower transparent circular trough (110),
b) placing some of the articles in the slots (156,158) formed by segmenting an upper transparent circular trough (110) whose outer diameter is slightly smaller than an inner diameter of the lower circular trough (110),
**characterized by** the following steps:
c) placing the upper trough within the lower trough (110),
d) stepping the height of the upper and lower troughs such that a top of the upper trough is of higher elevation than a top of the lower trough, thereby
e) forming a tiered stack (108),
f) rotating the tiered stack (108) for viewing, then
g) stopping the tiered stack with the slot containing a chosen article in a designated position, then
h) then removing a chosen article from the slot (56, 58).

3. The method as defined in claim 2, wherein in step e) the tiered stack (108) is formed by having at least four troughs.

## Patentansprüche

1. Verfahren zum Nachfüllen einer Imbissverkaufsvorrichtung (12,16,70,110) mit Artikeln, mit folgenden Schritten:
a) Aufsperren einer Abdeckung (70) über der geleerten, mehrstöckigen Behälteranordnung (108),
b) Entfernen der Abdeckung (70), dann
c) Entfernen der geleerten, mehrstöckigen Behälteranordnung (108) aus der Imbissverkaufsvorrichtung,
d) Zusammenfalten der geleerten Behälteranordnung (108) zu einer Anordnung mit im Wesentlichen einheitlicher Höhe,
e) Beschaffen einer nachgefüllten, zusammen gefalteten, mehrstöckigen Behälteranordnung und eines leeren Münzbehälters (18),
f) Auseinanderfalten einer nachgefüllten Behälteranordnung aus der Anordnung einheitlicher Höhe zu einer mehrstöckigen Anordnung (108),
g) Anordnen der nachgefüllten, mehrstöckigen Behälteranordnung in der Imbissverkaufsvorrichtung,
h) Austauschen eines Münzbehälters (18) in der Verkaufsvorrichtung mit dem leeren Münzbehälter (18)
i) Anordnen der entfernten Komponenten in dem Behälter,
j) Anordnen der Abdeckung (70) und
k) Abschließen der Abdeckung.

2. Verfahren zum Ausstellen von Artikeln zum Verkauf in einer Imbissverkaufsvorrichtung (12,16,70,110) umfassend:
a) Anordnen von einigen Artikeln in Schlitzen (156, 158), welche durch Segmentieren (34,36) einer unteren, transparenten, ringförmigen Wanne (110) ausgebildet sind,
b) Anordnen einiger Artikel in den Schlitzen (156, 158), welche durch Segmentieren einer oberen, transparenten, ringförmigen Wanne (110) ausgebildet sind, deren Außendurchmesser etwas kleiner ist als der Innendurchmesser der unteren, ringförmigen Wanne (110),
**gekennzeichnet durch** die folgenden Schritte:
c) Anordnen der oberen Wanne innerhalb der unteren Wanne (110),
d) Abstufen der Höhe der oberen und unteren Wanne derart, dass die Oberseite der oberen Wanne eine größere Höhe aufweist als die Oberseite der unteren Wanne, hierdurch
e) Ausbilden eines mehrstöckigen Stapels (108)
f) Drehen des mehrstöckigen Stapels (108) zum Ansehen, dann
d) Stoppen des mehrstöckigen Stapels in einer Position, bei der ein Schlitz, welcher einen gewählten Artikel enthält, in einer vorbestimmten Position ausgerichtet ist, dann
h) Entfernen eines gewählten Artikels aus dem Schlitz (56,58).

3. Verfahren nach Anspruch 2, wobei im Schritt e) der mehrstöckige Stapel (108) durch wenigstens vier Wannen gebildet ist.

## Revendications

1. Procédé de re-remplissage d'une machine de vente de collation (12, 16, 20, 110) avec des articles, comprenant les étapes consistant à :
a) déverrouiller une coque (20) au-dessus de l'ensemble de plateaux étagés vidés (108),
b) enlever la coque (20), puis
c) enlever un ensemble de plateaux étagés vidés (108) depuis l'appareil de vente de collation,
d) escamoter l'ensemble de plateaux vidés (108) à une conformation en hauteur à niveau sensiblement uniforme,
e) fournir un ensemble escamoté de plateaux étagés re-remplis et une boîte à pièces vide (18),
f) déployer par télescopage un ensemble de plateaux re-remplis depuis une conformation en hauteur à niveau sensiblement uniforme vers une conformation étagée (108),
g) placer l'ensemble de plateaux étagés re-remplis dans l'appareil de vente de collation,
h) échanger une boîte à pièces (18) dans l'appareil de vente par la boîte à pièces vide (18),
i) placer tous les composants enlevés dans la boîte,
j) replacer la coque (20), et
k) verrouiller la coque.

2. Procédé pour présenter des articles destinés à la vente dans un appareil de vente de collation (12, 16, 20, 110), comprenant les étapes consistant à :
a) placer certains des articles dans des fentes (156, 158) formées par segmentation (34, 36) d'une trémie circulaire inférieure transparente (110),
b) placer certains des articles dans les fentes (156, 158) formées par segmentation d'une trémie circulaire supérieure transparente (110) dont le diamètre extérieur est légèrement inférieur à un diamètre intérieur de la trémie circulaire inférieure (110),
**caractérisé par** les étapes suivantes :
c) placer la trémie supérieure à l'intérieur de la trémie inférieure ( 110),
d) réaliser des gradins dans la hauteur de la trémie supérieure et de la trémie inférieure de telle façon qu'un sommet de la trémie supérieure se trouve à une élévation plus élevée qu'un sommet de la trémie inférieure, grâce à quoi
e) on forme un empilement étagé (108),
f) mettre en rotation l'empilement étagé (108) pour pouvoir le voir, puis
g) arrêter l'empilement étagé avec la fente contenant un article choisi dans une position désignée, puis
h) enlever alors un article choisi depuis la fente (56,58).

3. Procédé selon la revendication 2, dans lequel, dans l'étape e), l'empilement étagé (108) est formé en prévoyant au moins quatre trémies.
